# EUROPÄISCHE PATENTSCHRIFT

(11) **EP 1 859 427 B1**
(45) Veröffentlichungstag und Bekanntmachung des Hinweises auf die Patenterteilung: **27.04.2011**
(21) Anmeldenummer: 06700516.5
(22) Anmeldetag: 05.01.2006
(51) Int. Cl.: G08G 1/09, G01C 21/36

(54) **VERFAHREN UND VORRICHTUNG ZUR ÜBERTRAGUNG VON GRUNDFORMEN VON VERKEHRSSTÖRUNGEN ZUM ZWECKE ZEITABHÄNGIGER NAVIGATION**
METHOD AND DEVICE FOR TRANSMITTING BASIC FORMS OF TRAFFIC DISRUPTIONS FOR THE PURPOSE OF TIME-DEPENDENT NAVIGATION
PROCEDE ET DISPOSITIF DE TRANSMISSION DE FORMES DE BASE DE PERTURBATIONS DU TRAFIC AUX FINS D'UNE NAVIGATION EN FONCTION DU TEMPS

(30) Priorität: 05.03.2005 DE 102005010246
(43) Veröffentlichungstag der Anmeldung: 28.11.2007
(73) Patentinhaber: Deutsche Telekom AG, 53113 Bonn (DE)
(72) Erfinder: FASTENRATH, Ulrich, 53121 Bonn (DE)
(86) Internationale Anmeldenummer: PCT/EP2006/000049
(87) Internationale Veröffentlichungsnummer: WO 2006/094568

(56) Entgegenhaltungen:
- DE-A1- 10 062 856
- DE-A1- 10 119 730
- DE-A1- 19 708 106
- US-A1- 2003 179 110

## Beschreibung

### Gebiet der Erfindung:

Bei der Erfindung handelt es sich im Wesentlichen um ein Verfahren zur Übertragung von Verkehrsinformationen an Endgeräte.

### Stand der Technik und Problemstellung

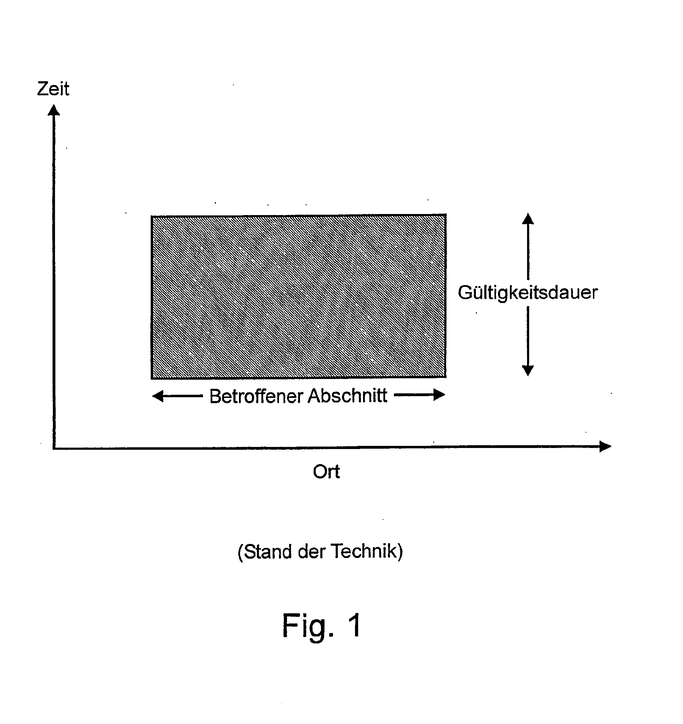

Statische Navigationssysteme für den Individualverkehr werden heute häufig ergänzt durch Komponenten zum Empfang und zur Verarbeitung aktueller Verkehrsmeldungen und werden dadurch zu dynamischen Navigationssystemen. Navigation in Straßennetzen ist ein intrinsisch zeitabhängiges Problem: Orte entlang der Route werden zu unterschiedlichen Zeitpunkten erreicht, daher sollte für Zusatzinformationen, die dynamisch dem Straßennetz hinzugefügt werden, bekannt sein, ob sie auch zu dem Zeitpunkt gültig sind, zu dem das betreffende Fahrzeug den betreffenden Ort voraussichtlich erreichen wird. Daher wird heute Verkehrsmeldungen, soweit bekannt, eine Gültigkeitsdauer beigefügt. Die aus Gültigkeitsdauer und betroffenem Abschnitt resultierende Beschreibung der Verkehrsbehinderung ist ein rechteckiges Objekt in einem Weg-Zeit-Diagramm (Figur 1). Das in der Routenplanung zu berücksichtigende Hindernis ist also aus der Sicht des Endgeräts entweder vorhanden oder nicht - und wenn es vorhanden ist, dann in voller Länge.

Reale Verkehrsstörungen stellen sich anders dar. Sie wachsen oder schrumpfen und ändern ihre innere Struktur. Dies nahm in jüngster Zeit das TMC Forum zum Anlass, Wachstumsgeschwindigkeiten als zu übertragende Informationselemente zu standardisieren. Dies wirft jedoch aus Sicht des Endgerätes neue Fragen auf: Zu welcher Zeit war die Länge gültig, die zusammen mit der Wachstumsgeschwindigkeit den weiteren Verlauf angibt? Wie lange bleibt die Wachstumsgeschwindigkeit gültig? Ist die vorgenommene Diskretisierung in Schritten von 10km/h ausreichend?

Weniger subtile Lösungsansätze vertrauen auf häufige Änderungsmeldungen - diese ermöglichen es dem Endgerät jedoch nicht, die weitere Entwicklung vorherzusehen und angemessen bei der Routenberechnung zu berücksichtigen.

Dokument DE 19 708 106 A1 beschreibt eine Einrichtung und Verfahren zur Information über Verkersstörungen, wobei die Verkehrsdaten mit Hilfe eines für den jeweiligen Streckenabschnitt gültigen Fluß-Dichte-Diagramms beschrieben werden.

Dokument DE 10 119 730 A1 beschreibt ein Verfahren zur Fahrzeugseitigen Anzeige von Verkehrsinformationen anhand weg-Zeit- Diagramme.

Aufgabe der Erfindung ist es, ein Verfahren und eine Vorrichtung bereitzustellen, die eine dynamische Zeitbetrachtung der Stausituation ermöglichen, ohne dass permanent Daten über die Stausituation übertragen werden müssen.

Diese Aufgabe wird durch die Erfindungen mit den Merkmalen der unabhängigen Ansprüche 1, 11 und 22 gelöst. Vorteilhafte Weiterbildungen der Erfindungen sind in den Unteransprüchen gekennzeichnet.

Im Wesentlichen handelt es sich um ein Verfahren zur Übertragung von Informationen zur Beschreibung von Verkehrsstörungen an mobile Endgeräte, das die folgenden Schritte umfasst.

In einem ersten Schritt werden Informationen codiert, die die Verkehrstörung im Weg-Zeit-Diagramm beschreiben, wobei die Verkehrsstörung im Weg-Zeit-Diagramm in der Regel nicht rechteckig ist. Die so codierten Informationen werden an das Endgerät übertragen, das die Informationen dann wieder decodiert. Das Endgerät bestimmt das Weg-Zeit-Diagramm und berechnet eine mögliche Verkehrsstörung auf der Basis des Weg-Zeit-Diagramms. Auf der Basis der erfassten Informationen des Endgerätes, bei dem es sich vorzugsweise um ein Navigationsgerät handelt, wie Uhrzeit, Position und Geschwindigkeit, kann berechnet werden, ob die Verkehrsstörung Einfluss auf die Fahrzeit hat, um dann ggf. eine Alternativroute zu bestimmen oder die erwartete Ankunftszeit neu zu berechnen. Bei den übertragenen Weg-Zeit-Diagrammen handelt es sich im Wesentlichen um eine kleine Anzahl von Grundformen, die auch zu komplexeren Formen zusammengesetzt werden können.

Die vorgeschlagene Lösung des Problems beruht auf der Erkenntnis aus der Verkehrswissenschaft, dass es nur wenige Grundtypen von Verkehrsstörungen gibt, die charakteristische Formen im Weg-Zeit-Diagramm haben.

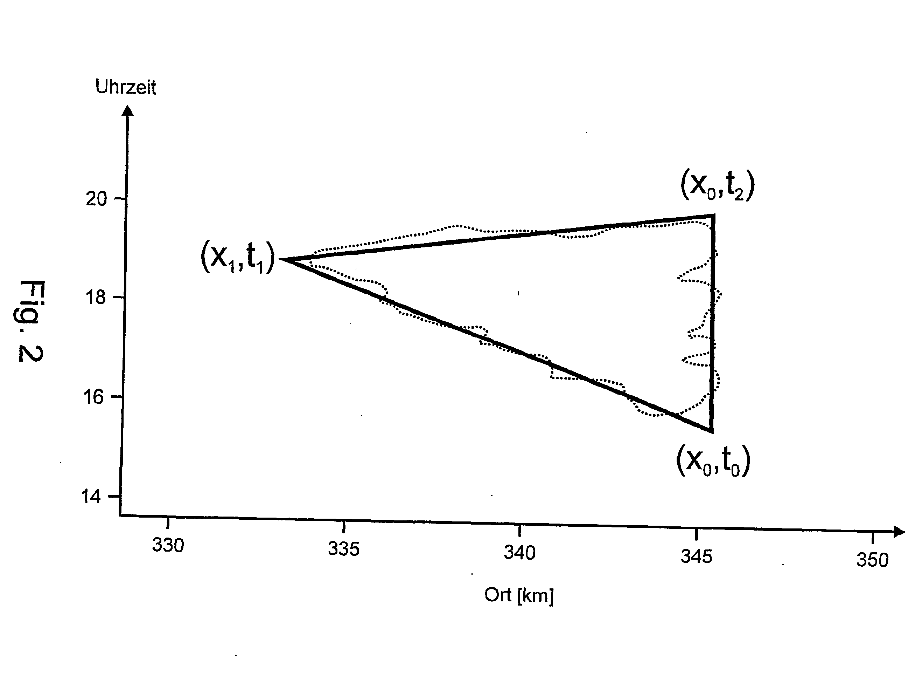

Ein wichtiger Störungstyp entsteht an Engstellen (z. B. Zuflüssen, Baustellen, Spurverengungen etc.) und bleibt ortsfest, d. h. der Stauanfang haftet an der Engstelle (Ein Beispiel ist beigefügt als Fig. 2). Solange der Zufluss die Kapazität der Engstelle übersteigt, wächst der Stau, d. h. das Stauende wandert stromaufwärts. Sobald der Zufluss nachlässt und die Kapazität der Engstelle unterschreitet, schrumpft der Stau dadurch, dass das Stauende stromabwärts wandert, bis es auf den Stauanfang trifft und der Stau sich vollständig aufgelöst hat. In einem Weg-Zeit-Diagramm ist der Störungstyp I dreieckig, d. h. er lässt sich durch die Anzahl Ecken (n=3) und deren Koordinaten vollständig beschreiben.

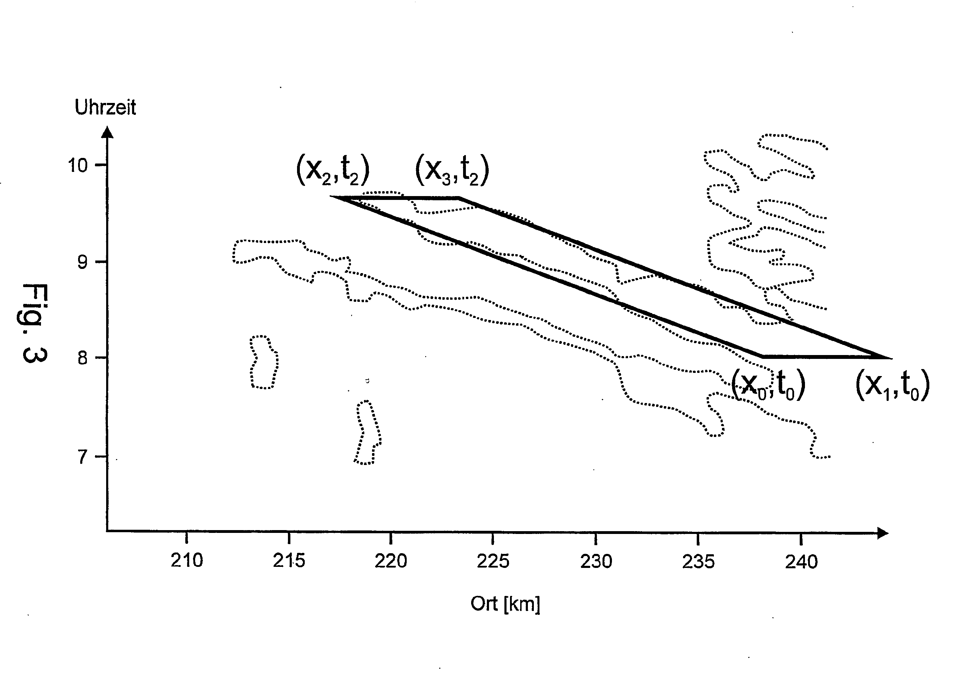

Der zweite Grundtyp ist der "breite, sich bewegende Stau" ("wide moving jam"). Er löst sich aus einem bereits gestörten Gebiet ab und bewegt sich über lange Zeit mit konstanter Länge stromaufwärts (Ein Beispiel ist beigefügt als Fig. 3). Da am Stauende die Ursache für diesen Typ nicht mehr erkennbar ist, bezeichnet man ihn landläufig auch als "Stau aus dem Nichts". In einem Weg-Zeit-Diagramm ist der Störungstyp II ein Parallelogramm, d. h. er lässt sich durch die Anzahl Ecken (n=4) und deren Koordinaten vollständig beschreiben.

Die Unterscheidung dieser Grundtypen und die Berechnung der Koordinaten der Eckpunkte ist möglich durch bekannte verkehrstechnische Verfahren, wie z. B. beschrieben in EP 97 953 622.4, EP 0 884 708 A2, DE 199 35 770 A1, DE 199 35 769 A1. Diese Verfahren ermöglichen es, Abschätzungen zu treffen, die unvollständige Informationen vervollständigen.

Die Anzahl und Koordinaten der Eckpunkte ermöglichen es dem empfangenden Endgerät, die Form der Störung im Weg-Zeit-Diagramm zu rekonstruieren und zu jedem, auch und insbesondere in der Zukunft liegenden Zeitpunkt den korrekten Streckenwiderstand für die betroffene Strecke anzusetzen.

Änderungsmeldungen sind nicht mehr erforderlich, wenn die Länge der Störung sich ändert, sondern erst, wenn neue Erkenntnisse über deren Form vorliegen, was wesentlich seltener der Fall ist. Dies schont die zur Verfügung stehende Bandbreite.

Komplexere Formen können durch Überlagerung der Grundformen zusammengesetzt werden. Auch kann die Grundform unmittelbar codiert werden, so dass die Bestimmung der Form über die Koordinaten nicht mehr notwendig ist. Dies kann bei komplexen Grundformen von Vorteil sein.

Die Zeitpunkte der Entstehung, der Übertragung oder der Gültigkeit einer Meldung mit bestimmter Länge werden irrelevant und brauchen daher entlang der Übertragungskette nicht mehr ermittelt oder berücksichtigt werden, da eine Grundform im Weg-Zeit-Diagramm ein statisches Gebilde ist. Egal, zu welchem Zeitpunkt die Meldung generiert oder übertragen wird, das Endgerät kann sie auf jeden Fall korrekt interpretieren.

Die Angabe der räumlichen Koordinaten kann im TMC-Kanal durch die primary und secondary Locations und Abstände zu diesen Locations, z. B. in Metern, erfolgen. Als zusätzliches Merkmal kann einer Grundform mit Anzahl und Koordinaten der Eckpunkte der voraussichtliche Verlauf der Reisezeit während der Lebensdauer der Störung hinzugefügt werden.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigen:
- Fig. 1: eine Verkehrsmeldung mit Gültigkeitsdauer, wie sie bisher aus dem Stand der Technik bekannt ist;
- Fig. 2: eine dreieckige Grundform, die einen Stau beschreibt;
- Fig. 3: ein Parallelogramm, das einen "Wide Moving Jam" beschreibt.

Die Figur 1 zeigt eine Verkehrsmeldung im Weg-Zeit-Diagramm, der keinerlei Dynamik zu entnehmen ist. Diesem Diagramm ist lediglich zu entnehmen, in welchem Abschnitt einer Straße zu welcher Zeit mit einer Verkehrsbeeinträchtigung zu rechnen ist.

Die Figur 2 zeigt hingegen eine Stauform, die z. B. bei einer Verengung der Spur oder einem anderen Hindernis auftritt. Hierbei ist deutlich zu erkennen, dass Fahrzeuge am Anfang des Staus bei Km 335 nur mit einer geringe Wartezeit rechnen müssen, wohingegen Fahrzeuge bei Km 345 zu einem späteren Zeitpunkt mit einer größeren Wartezeit zu rechnen haben.

Die Figur 3 zeigt eine Stauform eines sich "sich bewegenden breiten Staus", der sich nach einer gewissen Zeit auflöst und der sich in Form eines Parallelogramms darstellen lässt. Aufgrund des Umstandes, dass sich der Stau nach einer gewissen Zeit auflöst, ist die absolute Stauzeit nahezu zu jedem Kilometer gleich, wobei sich jedoch die Lage als Funktion der Zeit ändert.

Überlagerungen der Grundformen sind denkbar, z.B. ein Stau mit seiner Grundform des Dreiecks, der aufgrund der Beseitigung des Staugrundes dann in ein Parallelogramm überführt wird, ein "wide moving jam", der sich in der dreieckigen Grundform auflöst. Darüber hinaus sind beliebige andere Kombinationen denkbar. Die Allgemeinheit ist durch die Grundformen in keiner Weise eingeschränkt, da sich jeder Polygonzug im (x,t)-Diagramm in Dreiecke zerlegen lässt. Dies ist sogar bereits beim verkehrstechnisch motivierten Parallelogramm ("wide moving jam") der Fall.

Im Rahmen der Erfindung sind zahlreiche Abwandlungen und Weiterbildungen der beschriebenen Ausführungsbeispiele verwirklichbar, ohne dass die Ausführungsbeispiele eine Einschränkung des Schutzumfanges darstellen sollen.

## Patentansprüche

1. Verfahren zur Übertragung von Informationen zur Beschreibung von Verkehrsstörungen zu einem mobilen Endgerät, insbesondere ein Navigationsgerät, umfassend die Schritte:
- Codierung der Informationen, die die Verkehrsstörung im Weg-Zeit-Diagramm beschreiben, wobei das Weg-Zeit-Diagramm
die Gültigkeitsdauer einer Verkehrsstörung in einem betroffenen Abschnitt beschreibt,
- Übertragung der codierten Informationen an das mobile Endgerät,
- Rekonstruktion des Weg-Zeit-Diagramms durch das mobile Endgerät,
**dadurch gekennzeichnet,**
**dass** das Weg-Zeit-Diagramm entweder aus mindestens einer von zwei Grundformen oder daraus zusammengesetzten komplexeren Formen besteht, wobei die Grundformen ein Dreieck und ein Parallelogramm sind, und dass die Wahl der Grundform vom Verkehrsstörungstyp abhängig ist.

2. Das Verfahren nach einem oder mehreren der vorhergehenden Ansprüche, wobei die Codierung der Informationen der Grundform auf der Basis der Anzahl und der Koordinaten der Eckpunkte erfolgt.

3. Das Verfahren nach dem vorhergehenden Anspruch, wobei die räumlichen Koordinaten an Fahrzeuge über Punkt-zu-Punkt Kommunikation übertragen werden.

4. Das Verfahren nach Anspruch 2 , wobei die räumlichen Koordinaten über ein Broadcast-Medium übertragen werden.

5. Das Verfahren nach dem vorhergehenden Anspruch, wobei die räumlichen Koordinaten über den TMC-Kanal übertragen werden.

6. Das Verfahren nach dem vorhergehenden Anspruch, wobei die Koordinaten durch primären und sekundären orten und Abstände zu diesen orten bestimmt werden.

7. Das Verfahren nach einem oder mehreren der vorhergehenden Ansprüche, wobei Störungsanderungsmeldungen dann erfolgen, wenn sich die Grundform der Störung verändert hat.

8. Das Verfahren nach einem oder mehreren der vorhergehenden Ansprüche, wobei die codierten Informationen die Art der Grundform selber codieren.

9. Das Verfahren nach einem oder mehreren der vorhergehenden Ansprüche, wobei die codierten Informationen den voraussichtlichen Verlauf der Reisezeit während der Lebensdauer der Störung umfassen.

10. Das Verfahren nach einem oder mehreren der vorhergehenden Ansprüche, wobei die komplexeren Formen der Störung durch Überlagerung der Grundformen, Dreiecke und Parallelogramme, zusammengesetzt werden.

11. Mobiles Endgerät zur Navigation mit - Mitteln zur Decodierung der Informationen, die die Verkehrstörung im Weg-Zeit-Diagramm beschreiben, wobei das Weg-Zeit-Diagramm die Gültigkeitsdauer einer Verkehrsstörung in einem betroffenen Abschnitt beschreibt,
- Mitteln zum Empfang der codierten Informationen, **dadurch gekennzeichnet, dass**
dass das Weg-Zeit-Diagramm entweder aus mindestens einer von zwei Grundformen oder daraus zusammengesetzten komplexeren Formen besteht,
wobei die.Grundformen ein Dreieck und ein Parallelogramm sind, und dass die Wahl der Grundform vom Verkehrsstörungstyp abhängig ist.

12. Das mobile Endgerät nach einem oder mehreren der vorhergehenden Endgerätoansprüche, wobei Mittel vorhanden sind, die auf der Basis des Weg-Zeit-Diagramms den Streckenwiderstand berechnen.

13. Das mobile Endgerät nach einem oder mehreren der vorhergehenden zwei Endgeräteansprüche, wobei Mittel vorhanden sind, die aus den codierten Informationen die Koordinaten der Eckpunkte der Grundform herleiten.

14. Das mobile Endgerät nach einem oder mehreren der vorhergehenden drei Endgeräteansprüche, wobei Mittel vorhanden sind, die die Grundform auf der Basis der Anzahl und der Koordinaten der Eckpunkte decodieren.

15. Das mobile Endgerät nach einem oder mehreren der vorhergehenden zwei Ansprüche, wobei die räumlichen Koordinaten über Punkt-zu-Punkt Kommunikation übertragen werden.

16. Das mobile Endgerät, nach einem oder mehreren der Ansprüche 13 oder 14, wobei die räumlichen Koordinaten über ein Broadcast-Medium übertragen werden.

17. Das mobile Endgerät nach dem vorhergehenden Anspruch, wobei die räumlichen Koordinaten über den TMC-Kanal übertragen werden.

18. Das mobile Endgerät nach dem vorhergehenden Anspruch, wobei Mittel vorhanden sind, die die Koordinaten durch die primären und sekundäre orten und Abstände zu diesen orten bestimmen.

19. Das mobile Endgerät nach einem oder mehreren der vorhergehenden acht Endgeräteansprüche, wobei Mittel vorhanden sind, die anhand der codierten Informationen die Art der Grundform unmittelbar bestimmen, ohne dabei die Eckpunkte zu betrachten.

20. Das mobile Endgerät nach einem oder mehreren der vorhergehenden Endgeräteansprüche, wobei Mittel vorhanden sind, die den codierten Informationen den voraussichtlichen Verlauf der Reisezeit während der Lebensdauer der Störung entnehmen.

21. Das mobile Endgerät nach einem oder mehreren der vorhergehenden neun Endgeräteansprüche, wobei Mittel vorhanden sind, die komplexere Störungsformen durch Überlagerung der Grundformen zusammensetzen.

22. Vorrichtung zur Übermittlung von Verkehrsinformationen an Endgeräte mit
- Mitteln zur Codierung der Informationen, die die Verkehrsstörung im Weg-Zeit-Diagramm beschreiben, wobei das Weg-Zeit-Diagramm die Gültigkeitsdauer einer Verkehrsstörung in einem betroffenen Abschnitt beschreibt ,
- Mitteln zur Übertragung der codierten Informationen, an das mobile Endgerät,
**dadurch gekennzeichnet, dass**
dass das Weg-Zeit-Diagramm entweder aus mindestens einer von zwei Grundformen oder daraus zusammengesetzten komplexeren Formen besteht,
wobei die Grundformen ein Dreieck und ein Parallelogramm sind, und dass die Wahl der Grundform vom Verkehrsstörungstyp abhängig ist.

23. Vorrichtung zur Übermittlung von Verkehrsstörungsinformationen nach einem oder mehreren der vorhergehenden Vorrichtungsansprüche, wobei auf der Basis des Weg-Zeit-Diagramms der Streckenwiderstand berechenbar ist.

24. Vorrichtung zur Übermittlung von Verkehrsstörungsinfortnationen nach einem oder mehreren der vorhergehenden zwei Vorrichtungsansprüche, wobei aus den codierten Informationen die Koordinaten der Eckpunkte der Grundform ableitbar sind.

25. Vorrichtung zur Übermittlung von Verkehrsstörungsinformationen nach dem vorhergehenden Vorrichtungsanspruch, wobei die Informationen die Codierung der Grundform auf der Basis der Anzahl der Eckpunkte und der Koordinaten der Eckpunkte umfassen.

26. Vorrichtung zur Übermittlung von Verkehrsstörungsinformationen nach einem oder mehreren der vorhergehenden Vorrichtungsansprüche, wobei Mittel vorhanden sind, die die codierten Koordinaten per Funk übertragen.

27. Vorrichtung nach einem oder mehreren der vorhergehenden zwei Ansprüche, wobei die räumlichen Koordinaten über Punkt-zu-Punkt Kommunikation übertragen werden.

28. Vorrichtung nach einem oder mehreren der Ansprüche 25 oder 26, wobei die räumlichen Koordinaten über ein Broadcast-Medium übertragen werden.

29. Vorrichtung nach dem vorhergehenden Anspruch, wobei die räumlichen Koordinaten über den TMC-Kanal übertragen werden.

30. Vorrichtung nach dem vorhergehenden Anspruch, wobei die Koordinaten durch primären und sekondären orten und Abstände zu diesen orten bestimmt werden.

31. Vorrichtung zur Übermittlung von Verkehrsstörungsinformationen nach einem oder mehreren der vorhergehenden Vorrichtungsansprüche, wobei die Mittel so ausgebildet sind, dass Störungsänderungsmeldungen erst dann erfolgen, wenn sich die Grundform der Störung verändert hat.

32. Vorrichtung zur Übermittlung von Verkehrsstörungsinformationen nach einem oder mehreren der vorhergehenden Vorrichtungsansprüche, wobei Mittel vorhanden sind, die die Art der Grundform selber codieren.

33. Vorrichtung zur Übermittlung von Verkehrsstörungsinformationen nach einem oder mehreren der vorhergehenden elf Vorrichtungsansprüche, wobei Mittel vorhanden sind, die Informationen über den voraussichtlichen Verlauf der Reisezeit während der Lebensdauer der Störung codieren.

34. Vorrichtung zur Übermittlung von Verkehrsstörungsinformationen nach einem oder mehreren der vorhergehenden zwölf Vorrichtungsanspruche, wobei Mittel vorhanden sind, die komplexere Formen der Störung durch Überlagerung der Grundformen zusammensetzen.

35. Datenträger für einen Computer mit Mitteln zur Speicherung einer Software, die die Schritte nach einem oder mehreren vorhergehenden Verfahrensansprüchen 1 bis 10 durchführt.

36. Computersystem, mit Mitteln zur Durchführung eines Verfahrens nach einem oder mehreren der vorhergehenden Verfahrensansprüchen 1 bis 10.

## Claims

1. Method for transmitting information for describing traffic disturbances to a mobile terminal device, in particular a navigation device, comprising the steps:
- encoding the items of information that describe the traffic disturbance in a distance-time diagram, wherein the distance-time diagram describes the period of validity of a traffic disturbance in an affected section,
- transmission of the encoded information to the mobile terminal device,
- reconstruction of the distance-time diagram by the mobile terminal device,
**characterized in that**
the distance-time diagram consists of either at least one of two basic shapes, or of more complex shapes assembled therefrom, - wherein the basic shapes are a triangle and a parallelogram, and **in that** the choice of basic shape depends on the type of traffic disturbance.

2. The method according to one or more of the preceding claims, wherein the encoding of the items of information for the basic shape takes place on the basis of the number and coordinates of the vertices.

3. The method according to the preceding claim, wherein the spatial coordinates are transmitted to vehicles via point-to-point communication.

4. The method according to claim 2, wherein the spatial coordinates are transmitted via a broadcast medium.

5. The method according to the preceding claim, wherein the spatial coordinates are transmitted via the TMC channel.

6. The method according to the preceding claim, wherein the coordinates are determined by primary and secondary locations and distances from these locations.

7. The method according to one or more of the preceding claims, wherein reports of changes in the traffic disturbance take place when the basic shape of the disturbance has changed.

8. The method according to one or more of the preceding claims, wherein the encoded information encodes the type of the basic shape itself.

9. The method according to one or more of the preceding claims, wherein the encoded information includes the predicted behavior of the travel time during the lifetime of the traffic disturbance.

10. The method according to one or more of the preceding claims,
wherein the more complex shapes of the disturbance are assembled by superposition of the basic shapes, triangles and parallelograms.

11. Mobile terminal device for navigation having:
- means for decoding the items of information that describe the traffic disturbance in the distance-time diagram, wherein the distance-time diagram describes the period of validity of a traffic disturbance in an affected section,
- means for receiving the encoded information,
**characterized in that**
the distance-time diagram consists of either at least one of two basic shapes, or of more complex shapes assembled therefrom, wherein the basic shapes are a triangle and a parallelogram, and **in that** the choice of basic shape depends on the type of traffic disturbance.

12. The mobile terminal device according to one or more of the preceding terminal device claims, wherein means are present that calculate the section resistance on the basis of the distance-time diagram.

13. The mobile terminal device according to one or more of the preceding two terminal device claims, wherein means are present that derive the coordinates of the vertices of the basic shape from the encoded information.

14. The mobile terminal device according to one or more of the preceding three terminal device claims, wherein means are present that decode the basic shape on the basis of the number and coordinates of the vertices.

15. The mobile terminal device according to one or more of the preceding two claims, wherein the spatial coordinates are transmitted via point-to-point communication.

16. The mobile terminal device according to one or more of claims 13 or 14, wherein the spatial coordinates are transmitted via a broadcast medium.

17. The mobile terminal device according to the preceding claim, wherein the spatial coordinates are transmitted via the TMC channel.

18. The mobile terminal device according to the preceding claim, wherein means are present that determine the coordinates by the primary and secondary locations and distances from these locations.

19. The mobile terminal device according to one or more of the preceding eight terminal device claims, wherein means are present that determine the type of basic shape directly using the encoded information, without considering the vertices.

20. The mobile terminal device according to one or more of the preceding terminal device claims, wherein means are present that extract the predicted behavior of the travel time during the lifetime of the traffic disturbance from the encoded information.

21. The mobile terminal device according to one or more of the preceding nine terminal device claims, wherein means are present that assemble the more complex shapes by superposition of the basic shapes.

22. Device for transmitting traffic information to terminal devices, having
- means for encoding the items of information that describe the traffic disturbance in the distance-time diagram, wherein the distance-time diagram describes the period of validity of a traffic disturbance in an affected section,
- means for transmitting the encoded information to the mobile terminal device,
**characterized in that**
the distance-time diagram consists of either at least one of two basic shapes, or of more complex shapes assembled therefrom, wherein the basic shapes are a triangle and a parallelogram, and **in that** the choice of basic shape depends on the type of traffic disturbance.

23. Device for transmitting traffic disturbance information according to one or more of the preceding device claims, wherein the section resistance can be calculated on the basis of the distance-time diagram.

24. Device for transmitting traffic disturbance information according to one or more of the preceding two device claims, wherein the coordinates of the vertices can be derived from the encoded information.

25. Device for transmitting traffic disturbance information according to the preceding device claim, wherein the information includes the encoding of the basic shape on the basis of the number of vertices and the coordinates of the vertices.

26. Device for transmitting traffic disturbance information according to one or more of the preceding device claims, wherein means are present that transmit the encoded coordinates by radio.

27. Device according to one or more of the preceding two claims, wherein the spatial coordinates are transmitted via point-to-point communication.

28. Device according to one or more of claims 25 or 26, wherein the spatial coordinates are transmitted via a broadcast medium.

29. Device according to the preceding claim, wherein the spatial coordinates are transmitted via the TMC channel.

30. Device according to the preceding claim, wherein the coordinates are determined by primary and secondary locations and distances from these locations.

31. Device for transmitting traffic disturbance information according to one or more of the preceding device claims, wherein the means are designed such that reports of changes in the traffic disturbance do not take place until the basic shape of the disturbance has changed.

32. Device for transmitting traffic disturbance information according to one or more of the preceding device claims, wherein means are present that encode the type of the basic shape itself.

33. Device for transmitting traffic disturbance information according to one or more of the preceding eleven device claims, wherein means are present that encode information about the predicted behavior of the travel time during the lifetime of the disturbance.

34. Device for transmitting traffic disturbance information according to one or more of the preceding twelve device claims, wherein means are present that assemble more complex shapes of the disturbance by superposition of the basic shapes.

35. Data medium for a computer having means for storing an item of software that carries out the steps according to one or more of the preceding method claims 1 through 10.

36. Computer system having means for carrying out a method according to one or more of the preceding method claims 1 through 10.

## Revendications

1. Procédé de transmission d'informations de description de perturbations de trafic vers un terminal mobile, notamment un dispositif de navigation, comprenant les étapes suivantes :
- codage des informations de description de la perturbation de trafic dans un diagramme espace-temps, le diagramme espace-temps décrivant la durée de validité d'une perturbation de trafic sur une section concernée,
- transmission des informations codées au terminal mobile,
- reconstruction du diagramme espace-temps par le terminal mobile,
**caractérisé en ce que**
le diagramme espace-temps consiste en au moins une de deux formes de base ou de formes plus complexes composées de ces dernières, les formes de base étant un triangle ou un parallélogramme, et **en ce que** le choix de la forme de base dépend du type de perturbation de trafic.

2. Procédé selon l'une ou plusieurs des revendications précédentes, dans lequel le codage des informations de la forme de base s'effectue sur la base du nombre et des coordonnées des angles.

3. Procédé selon la revendication précédente, dans lequel les coordonnées spatiales sont transmises à des véhicules par communication point-à-point.

4. Procédé selon la revendication 2, dans lequel les coordonnées spatiales sont transmises par un média de diffusion générale.

5. Procédé selon la revendication précédente, dans lequel les coordonnées spatiales sont transmises par le canal TMC.

6. Procédé selon la revendication précédente, dans lequel les coordonnées sont déterminées par des localisations primaires et secondaires et des distances par rapport à ces localisations.

7. Procédé selon l'une ou plusieurs des revendications précédentes, dans lequel des informations de changement de perturbation interviennent lorsque la forme de base de la perturbation a changé.

8. Procédé selon l'une ou plusieurs des revendications précédentes, dans lequel les informations codées procèdent elles-mêmes au codage de la forme de base.

9. Procédé selon l'une ou plusieurs des revendications précédentes, dans lequel les informations codées comprennent l'évolution prévisionnelle du temps de trajet pendant la durée de vie de la perturbation.

10. Procédé selon l'une ou plusieurs des revendications précédentes, dans lequel les formes plus complexes de la perturbation sont composées par superposition des formes de base, triangles et parallélogrammes.

11. Terminal mobile pour la navigation comprenant:
- des moyens pour décoder les informations de description des perturbations dans un diagramme espace-temps, le diagramme espace-temps décrivant la durée de validité d'une perturbation de trafic sur une section concernée,
- des moyens pour recevoir des informations codées,
**caractérisé en ce que**
le diagramme espace-temps consiste en au moins une de deux formes de base ou de formes plus complexes composées de ces dernières, les formes de base étant un triangle ou un parallélogramme, et **en ce que** le choix de la forme de base dépend du type de perturbation de trafic.

12. Terminal mobile selon l'une ou plusieurs des revendications de terminal précédentes, dans lequel des moyens sont prévus pour calculer la résistance de section sur la base du diagramme espace-temps.

13. Terminal mobile selon l'une ou plusieurs des deux revendications de terminal précédentes, dans lequel des moyens sont prévus pour déduire les coordonnées des angles des informations codées de la forme de base.

14. Terminal mobile selon l'une ou plusieurs des trois revendications de terminal précédentes, dans lequel des moyens sont prévus pour décoder la forme de base sur la base du nombre et des coordonnées des angles.

15. Terminal mobile selon l'une ou plusieurs des deux revendications précédentes, dans lequel les coordonnées spatiales sont transmises par communication point-à-point.

16. Terminal mobile selon l'une ou plusieurs des revendications 13 ou 14, dans lequel les coordonnées spatiales sont transmises par un média de diffusion générale.

17. Terminal mobile selon la revendication précédente, dans lequel les coordonnées spatiales sont transmises par le canal TMC.

18. Terminal mobile selon la revendication précédente, dans lequel des moyens sont prévus pour déterminer les coordonnées par les localisations primaires et secondaires et les distances par rapport à ces localisations.

19. Terminal mobile selon l'une ou plusieurs des huit revendications de terminal précédentes, dans lequel des moyens sont prévus pour directement déterminer le type de la forme de base moyennant les informations codées sans considérer les angles.

20. Terminal mobile selon l'une ou plusieurs des revendications de terminal précédentes, dans lequel des moyens sont prévus pour déduire l'évolution prévisionnelle du temps de trajet pendant la durée de vie de la perturbation des informations codées.

21. Terminal mobile selon l'une ou plusieurs des neuf revendications de terminal précédentes, dans lequel des moyens sont prévus pour composer des formes de perturbation plus complexes par superposition des formes de base.

22. Dispositif de transmission d'informations de trafic à des terminaux comprenant
- des moyens pour coder les informations de description des perturbations de trafic dans un diagramme espace-temps, le diagramme espace-temps décrivant la durée de validité d'une perturbation de trafic dans une section concernée,
- des moyens pour transmettre les informations codées au terminal mobile,
**caractérisé en ce que**
le diagramme espace-temps consiste en au moins une de deux formes de base ou de formes plus complexes composées de ces dernières, les formes de base étant un triangle ou un parallélogramme, et **en ce que** le choix de la forme de base dépend du type de perturbation de trafic.

23. Dispositif de transmission d'informations de perturbation de trafic selon l'une ou plusieurs des revendications de dispositif précédentes, dans lequel la résistance de section est calculable sur la base du diagramme espace-temps.

24. Dispositif de transmission d'informations de perturbation de trafic selon l'une ou plusieurs des deux revendications de dispositif précédentes, dans lequel les coordonnées des angles de la forme de base sont déductibles des informations codées.

25. Dispositif de transmission d'informations de perturbation de trafic selon la revendication de dispositif précédente, dans lequel les informations comprennent le codage de la forme de base sur la base du nombre des angles et des coordonnées des angles.

26. Dispositif de transmission d'informations de perturbation de trafic selon l'une ou plusieurs des revendications de dispositif précédentes, dans lequel des moyens sont prévus pour transmettre les coordonnées codées par radio.

27. Dispositif selon l'une ou plusieurs des deux revendications précédentes, dans lequel les coordonnées spatiales sont transmises par communication point-à-point.

28. Dispositif selon l'une ou plusieurs des revendications 25 ou 26, dans lequel les coordonnées spatiales sont transmises par un média de diffusion générale.

29. Dispositif selon la revendication précédente, dans lequel les coordonnées spatiales sont transmises par le canal TMC.

30. Dispositif selon la revendication précédente, dans lequel les coordonnées sont déterminées par des localisations primaires et secondaires et des distances par rapport à ces localisations.

31. Dispositif de transmission d'informations de perturbation de trafic selon l'une ou plusieurs des revendications de dispositif précédentes, dans lequel les moyens sont conçus de manière que des informations de changement de perturbation n'interviennent que lorsque la forme de base de la perturbation a changé.

32. Dispositif de transmission d'informations de perturbation de trafic selon l'une ou plusieurs des revendications de dispositif précédentes, dans lequel des moyens sont prévus qui procèdent eux-mêmes au codage du type de la forme de base.

33. Dispositif de transmission d'informations de perturbation de trafic selon l'une ou plusieurs des onze revendications de dispositif précédentes, dans lequel des moyens sont prévus pour coder des informations sur l'évolution prévisionnelle du temps de trajet pendant la durée de vie de la perturbation.

34. Dispositif de transmission d'informations de perturbation de trafic selon l'une ou plusieurs des douze revendications de dispositif précédentes, dans lequel des moyens sont prévus pour composer des formes plus complexes de la perturbation par superposition des formes de base.

35. Support de données destiné à un ordinateur comprenant des moyens pour enregistrer un logiciel apte à réaliser les étapes selon l'une ou plusieurs des revendications de procédé précédentes 1 à 10.

36. Système d'ordinateur comprenant des moyens pour réaliser un procédé selon l'une ou plusieurs des revendications de procédé précédentes 1 à 10.
